Europäisches Patentamt

European Patent Office

Office européen des brevets

(19)

(11) Numéro de publication : **0 404 859 B1**

(12) **FASCICULE DE BREVET EUROPEEN**

(45) Date de publication du fascicule du brevet :
**11.11.92 Bulletin 92/46**

(51) Int. Cl.⁵ : **G01D 5/26**

(21) Numéro de dépôt : **89908217.6**

(22) Date de dépôt : **06.07.89**

(86) Numéro de dépôt international :
**PCT/FR89/00353**

(87) Numéro de publication internationale :
**WO 90/00721 25.01.90 Gazette 90/03**

(54) **DISPOSITIF D'ANALYSE D'UN SIGNAL OPTIQUE.**

Jointe à la demande no. 89402094.0/0354825
(numéro de dépôt/numéro de publication de la
demande européenne) par décision du
04.09.91.

(30) Priorité : **08.07.88 FR 8809300**

(43) Date de publication de la demande :
**02.01.91 Bulletin 91/01**

(45) Mention de la délivrance du brevet :
**11.11.92 Bulletin 92/46**

(84) Etats contractants désignés :
**DE ES GB IT SE**

(56) Documents cités :
**EP-A- 0 191 589**
**EP-A- 0 251 632**
**Patent Abstracts of Japan, vol. 5, No. 182**
**(P-90)(854), 20 November 1981 & JP-**
**A-56111415**

(56) Documents cités :
**Journal of Lightwave Technology, vol. LT-5,**
**No. 2, February 1987, IEEE (New York, US), K.**
**Blotekjaer et al:** "**Choosingrelative optical**
**path delays in series-topology interferometric**
**sensor arrays**", **pages 229-235**

(73) Titulaire : **THOMSON-CSF**
**51, Esplanade du Général de Gaulle**
**F-92800 Puteaux (FR)**

(72) Inventeur : **REFREGIER, Philippe**
**Résidence "Les Jardins de Courcelles" Bât. D**
**F-91190 Gif-sur-Yvette (FR)**
Inventeur : **ROJAS, Dominique**
**35, avenue du Docteur-Durant**
**F-94110 Arcueil (FR)**
Inventeur : **TURPIN, Marc**
**1, clos de Bures**
**F-91440 Bures-sur-Yvette (FR)**

(74) Mandataire : **Guérin, Michel et al**
**THOMSON-CSF SCPI**
**F-92045 PARIS LA DEFENSE CEDEX 67 (FR)**

## Description

L'invention concerne un dispositif destiné à l'analyse et à la lecture d'un signal optique du type analysable comme au moins un train d'ondes fondamental associé à un jeu de trains d'ondes secondaires, issus dudit train fondamental et accusant un jeu de retards correspondants par rapport audit train d'ondes fondamental.

Le principe général de lecture consiste à retarder un signal de référence, à savoir par exemple le train d'ondes fondamental, afin de provoquer une interférence dudit signal de référence avec les signaux contenant l'information à analyser, à savoir par exemple chacun desdits trains l'ondes secondaires.

Ladite information à analyser peut-être par exemple la distance entre les trains d'ondes ou encore l'amplitude des trains d'ondes secondaires.

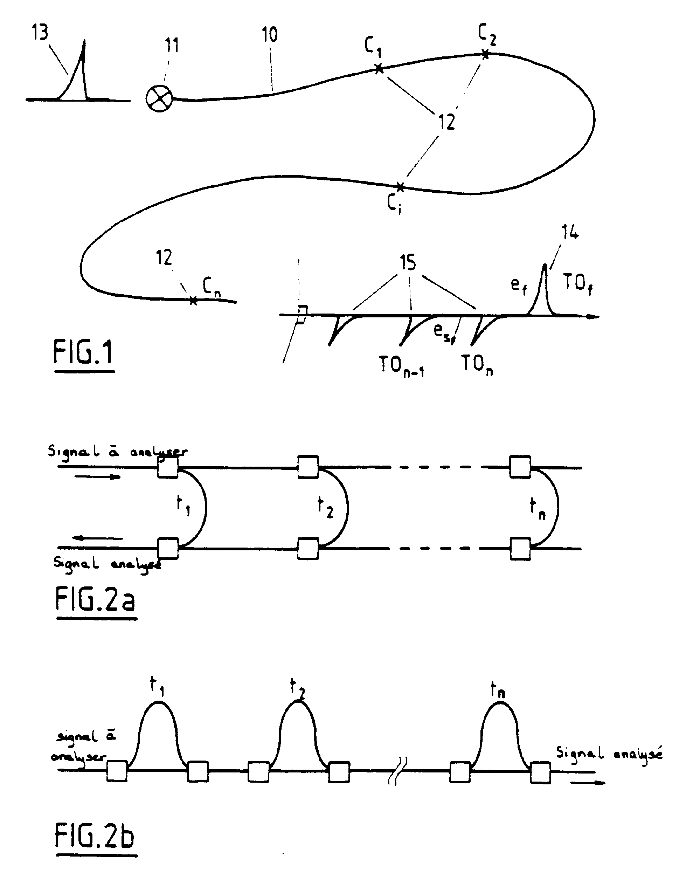

Ce type de signal est par exemple obtenu en sortie d'une fibre monomode à maintien de polarisation, associée à une source 11 à spectre large linéairement polarisée (ou une source émettant un faisceau, polarisé linéairement à l'extérieur de la source), la fibre comportant des points de couplage 12 entre les deux axes biréfringents (Fig. 1). Le capteur optique proprement dit est constitué par le tronçon de fibre comportant les points de couplage 12, et peut être soit intrinsèque (c'est à dire la fibre elle-même), ou extrinsèque (sous forme d'élément extérieur).

Les points de couplage 12 sont par exemple constitués par l'introduction d'un léger décalage en rotation des axes de biréfringence dans la fibre, en chaque point $c_1$, $c_2$, ... $c_n$. Chacun de ces décalages, qui sont en général faibles afin d'éviter les couplages multiples, introduit une perturbation du train d'ondes fondamental polarisé 13 émis par la source 11. Chaque perturbation génère ainsi un train d'ondes secondaire 15, en polarisation orthogonale par rapport au train d'onde fondamental 13-14. En d'autres termes, en supposant le train d'onde d'entrée 13 couplé dans le mode rapide, on récupère en sortie :

-un train d'ondes fondamental $TO_f$ 13, resté dans le mode rapide, et d'amplitude $e_f$.

-une série de trains d'ondes secondaires $TO_l$ 15, couplés dans le mode lent, et d'amplitude $e_s$.

Il est ensuite possible de projeter l'ensemble des trains d'ondes 14-15 dans le même état de polarisation, au moyen par exemple d'un polariseur à 45° des axes de biréfringence.

Un tel capteur à points de couplage multiples 12 peut par exemple être utilisé comme sonde continue de température, en utilisant les propriétés thermosensibles du différentiel de vitesse de propagation entre les deux axes de biréfringence de la fibre optique. Dans ce cas, l'analyse et la lecture du signal reçu du capteur consistent à mesurer le retard effectif de chaque train d'ondes secondaire 15 par rapport au train d'ondes fondamental de sortie 14. De façon connue, une telle lecture s'effectue en retardant le signal fondamental dans le dispositif de lecture, jusqu'à détecter son interférence avec chacun des trains d'ondes secondaires. La valeur du retard lue permet de calculer la température, après étalonnage du dispositif.

De façon connue, le moyen le plus stiple (au moins conceptuellement) de réaliser une telle lecture consiste à utiliser un interféromètre de Michelson balayable, afin d'induire le retard nécessaire pour que le train d'ondes fondamental puisse interférer avec les trains d'ondes $TO_{i.}$.

Cependant, si on considère un capteur comprenant 100 points de couplage répartis avec un intervalle de 10 m entre chaque couplage et une fibre dont. la biréfringence est de $5.10^{-4}$, le balayage de l'interféromètre doit être 50 cm. Compte tenu de la précision mécanique nécessaire, une telle plage de balayage entraîne une fréquence de lecture relativement faible et une souplesse d'utilisation limitée : la lecture ne peut être qu'à accès séquentiel (train d'ondes N1, puis N2, puis N3 etc... ).

Une seconde méthode adaptée à ce type de dispositif consisterait à traiter en parallèle les différents trains d'ondes (fig. 2a). Cependant dans ce cas, le nombre de détecteurs doit être de l'ordre du nombre de couplages. Pour pallier cet inconvénient, on peut utiliser des coupleurs actifs. Là encore, le nombre de coupleurs doit être de l'ordre du nombre de points de couplages (typiquement environ 100), quelque soit la structure parallèle ou série adoptée.

En outre, la structure série (Fig 2b) présente l'inconvénient d'atténuer (à cause des passages répétés dans les coupleurs commutables si par exemple ils sont de type optique intégrée), les trains d'onde secondaires $TO_i$, ce qui dégrade d'autant le rapport signal sur bruit.

Le dispositif selon l'invention a pour objectif de pallier ces divers inconvénients.

Plus précisément, un premier objectif de l'invention est de fournir un dispositif de lecture par cohérence de capteur optique, qui réalise un traitement du signal à analyser sans dégrader le rapport signal sur bruit des trains d'ondes secondaires. Par lecture par cohérence, on entend essentiellement le principe consistant à provoquer l'interférence des trains d'ondes fondamental et secondaires.

Un second objectif de l'invention est de fournir un tel dispositif de lecture qui assure d'une part un balayage rapide de l'ensemble du domaine de retard admissible, tout en permettant un balayage fin complémentaire assurant une mise en interférence et donc une lecture précises des retards.

Un autre objectif de l'Invention, dans un mode de réalisation spécifique, est de fournir un dispositif de lecture permettant une lecture simultanée et parallèle des différents retards de l'ensemble des trains d'onde secondaires provenant du capteur optique.

Ces objectifs ainsi que d'autres qui apparaîtront par la suite sont atteints à l'aide d'un dispositif d'analyse d'un signal optique tel que décrit dans les revendications 1 à 17.

D'autres caractéristiques et avantages de l'invention apparaîtront à la lecture de la description suivante de quelques modes de réalisation de l'invention, donnés à titre illustratif, et des dessins annexés dans lesquels :

- la figure 1 schématise la configuration d'un capteur optique à multiplexage par cohérence, du type associé au dispositif de lecture suivant l'invention ;
- les figures 2a et 2b illustrent deux structures possibles mais défavorables, de traitement. parallèle et série respectivement du jeu de trains d'ondes secondaires du signal analysé ;
- la figure 3 schématise le premier mode de réalisation du dispositif de lecture suivant l'invention, avec lignes élémentaires à retard sélectivement commutables ;
- les figures 4 et 5 sont des diagrammes illustrant une variante d'application du dispositif de lecture suivant l'invention à des signaux optiques à plusieurs trains d'onde fondamentaux, permettant soit de limiter le nombre d'éléments actifs, soit la plage d'exploration respectivement ;
- la figure 6 schématise un second mode de réalisation du dispositif de lecture suivant l'invention, avec lignes élémentaires à retard et à décalage en fréquence couplées consécutivement, en parallèle, sur la branche à retard de l'interféromètre de Mach Zehnder ;
- la figure 7 est un diagramme illustrant le fonctionnement du mode de réalisation de la figure 6 ;
- la figure 8 illustre une variante du mode de réalisation de la figure 6, avec ligne élémentaire à retard unique, couplée en parallèle et en bouclage arrière sur la branche à retard de l'interféromètre de Mach Zehnder ;
- la figure 9 illustre une seconde variante du mode de réalisation de la figure 6, avec séparateurs à déperdition minimale.
- la figure 10 illustre une mise en oeuvre du dispositif de lecture de l'invention sous forme d'un interféromètre de Michelson.

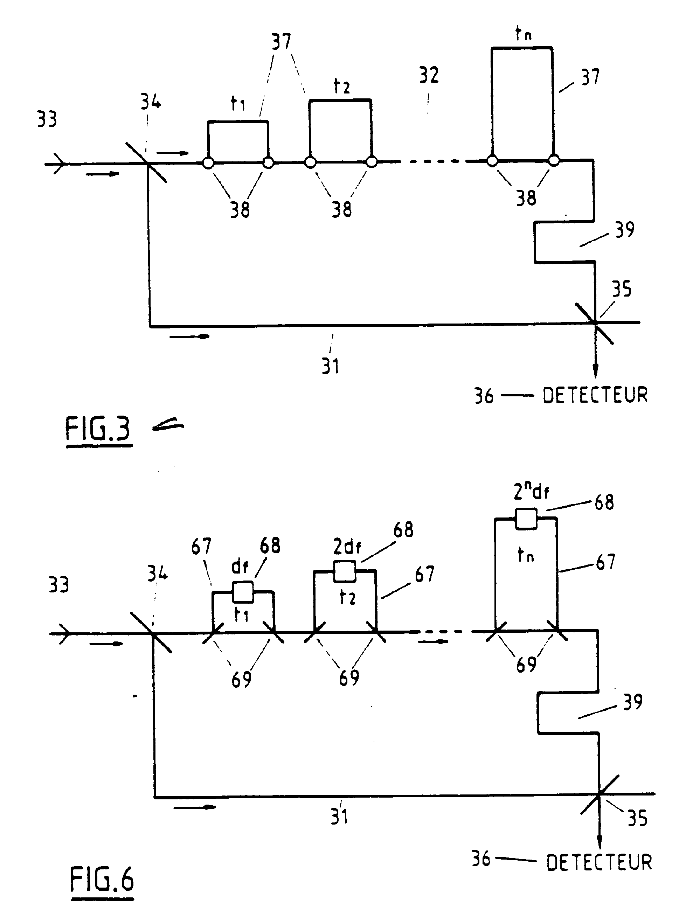

Comme représenté en figure 3, le dispositif de lecture suivant l'invention comporte un interféromètre, en l'occurrence un interféromètre de Mach Zehnder, dont :

- le premier bras 31 contient le signal à analyser,
- le second bras 32 engendre des retards, de façon discrète, sur le signal de référence, afin de permettre l'interférence avec les différents signaux à analyser.

Le signal source à analyser 33 est divisé entre les deux bras 31, 32 de l'interféromètre de Mach Zehnder au moyen d'un séparateur 34. Un composant optique 35 est monté en sortie des deux bras 31 - 32, afin de superposer les trains d'ondes secondaires à analyser ainsi que le train d'onde fondamental retardé, vers le système détecteur 36.

Le bras de retard 32 comporte des lignes élémentaires à retard 37, sélectivement commutables dans le bras. Des moyens de commutation 38 assurent sélectivement, pour chaque ligne élémentaire à retard 37, soit l'orientation du signal dans la ligne élémentaire, soit son shuntage. Ces moyens de commutation 38 peuvent être par exemple constitués par des commutateurs diélectriques liquides, ou de préférence des commutateurs optiques intégrés tels que décrits dans le document: "L'optique guidée monomode et ses applications", publié en 1985 aux Editions Masson. Tout moyen de commutation assurant la fonction correspondante convient également.

De façon avantageuse, les lignes élémentaires à retard 37 sont distribuées selon une progression géométrique des retards.

A titre d'exemple, dans le cas où les retards des différents trains d'onde secondaires sont des multiples entiers d'un retard élémentaire, ce qui correspond au cas où tous les capteurs mesurent le même signal, la suite des retards à induire est : $t_1 = t$ ; $t_2 = 2t$ ; $t_3 = 4t$; ... ; $t_n = 2^{n-1} t$.

Avec une telle distribution des valeurs de retard des lignes élémentaires 37, on peut ainsi engendrer $2^n$ retards à partir de n lignes 37 selon le schéma de fonctionnement suivant :

| Retards activés | Retard total |
|---|---|
| aucun | 0 |
| t1 | t |
| t2 | 2t |
| t1 + t2 | 3t |
| t3 | 4t |

Une fois les retards principaux induits, il suffit de disposer en série (à l'intérieur ou l'extérieur des bras) un moyen de génération d'un retard variable 39 afin d'explorer une plage continue autour des retards principaux, qui sont par construction de nature discrète. Afin de limiter cette plage d'exploration, des retards discrets supplémentaires peuvent être ajoutés au système.

Cette solution a le mérite de limiter le nombre de commutateurs optiques 38 nécessaires (typiquement de l'ordre du logarithme du nombre de couplages) ce qui atténue au minimum le signal à analyser tout en permettant une exploration rapide des différents couplages dans un ordre a priori quelconque.

La figure 6 correspond à un second mode de réalisation du dispositif de lecture suivant l'invention dans lequel les retards du train d'onde fondamental sont générés par des lignes élémentaires à retard 67 associées chacune à des moyens (68) de décalage en fréquence du signal retardé. De cette façon, chaque retard t s'accompagne d'un décalage en fréquence spécifique df du signal retardé. Chacune des lignes élémentaires à retard 67 est couplée en parallèle, au moyen de séparateurs optiques 69, sur la branche à retard 32 de l'interféromètre de Mach Zehnder.

Les moyens 68 de décalage en fréquence sont par exemple constitués par un retardateur à effet Doppler, ou à cristal acousto optique, ou encore par un moduleur de phases, thermooptique et/ou électrooptique, ou autre.

Ce mode de réalisation permet le réaliser une lecture parallèle des retards de chacun des trains d'onde secondaires grâce à un multiplexage fréquentiel des différents retards.

Ainsi, pour le retard t1, le décalage en fréquence doit être df ; pour t2, 2df ; pour t3, 3df ; etc.... De la sorte, le décalage en fréquence sera différent pour chacune des combinaisons linéaires des retards de base.

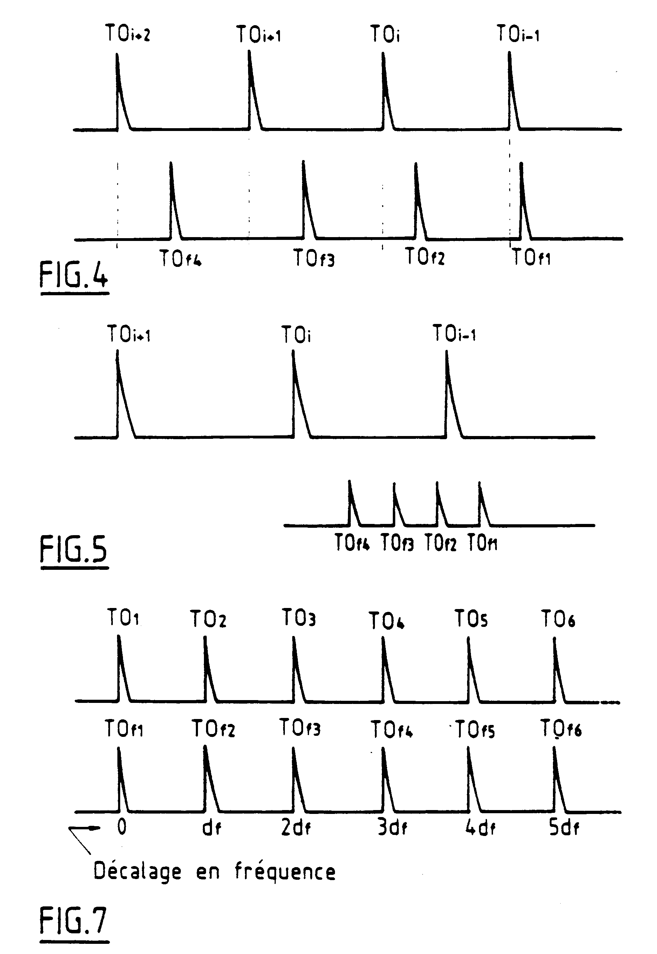

En sortie de l'interféromètre, on sera alors en présence des trains d'ondes tels que représentés en figure 7 :

- les trains d'onde secondaires $TO_i$, provenant de la branche 31 de l'interféromètre, et maintenus à la fréquence optique f ;
- les trains d'ondes fondamentaux retardés $TO_{fi}$, ayant subi les différents retards, ainsi que les décalages en fréquence correspondants.

Chaque couple d'interférence $(TO_i, TO_{fi})$ se trouve donc à une fréquence décalée spécifique (i-1) df. Une analyse en séries de Fourier permet donc de démultiplexer les différentes interférences.

Dans le cas particulier où la suite des retards à induire est la suivante : t, 2t, 3t, 4t, etc..., le tableau suivant illustre les combinaisons de lignes élémentaires à retard permettant d'obtenir chacun des retards quantifiés 0, t, 2t, 3t, 4t, etc, et les décalages en fréquence correspondants df, 2 df, 3 df, 4 df, ....

| Retards activés | retard total | Décalage en fréquence |
|---|---|---|
| 0 | 0 | 0 |
| t1 | t | df |
| t2 | 2t | 2df |
| t1+t2 | 3t | 3df |
| t3 | 4t | 4df |

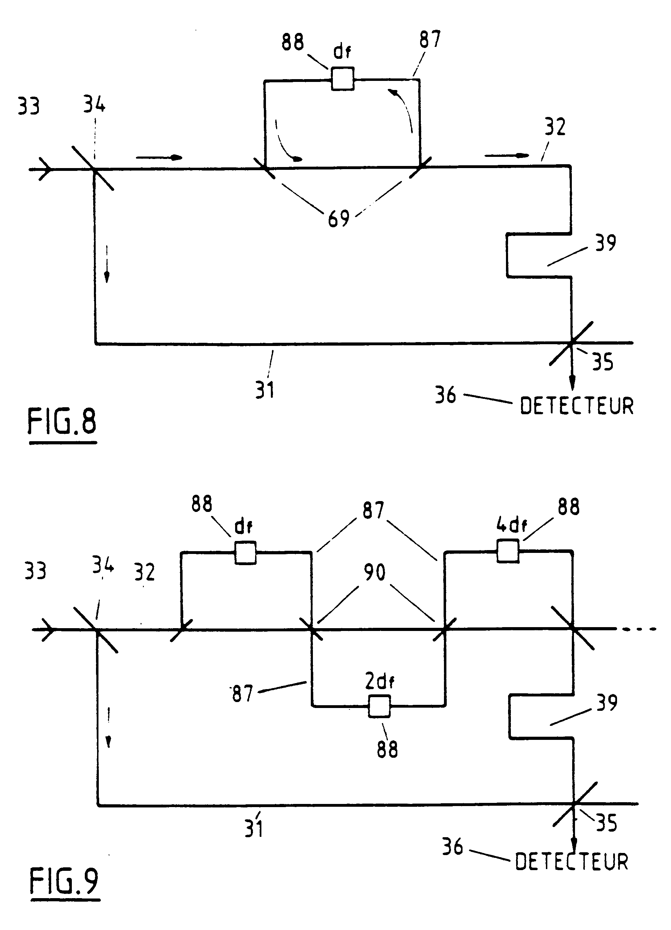

La figure 8 illustre une version compacte du mode de réalisation à retard quantifié et décalage en fréquence. Dans ce mode de réalisation, une seule ligne élémentaire à retard 87 est branchée en parallèle et en bouclage arrière sur la branche à retard 32 de l'interféromètre. Un décalage en fréquence df 88 est généré à chaque parcours de la ligne 87.

Dans le mode de réalisation de la figure 9, les lignes élémentaires à retard 67 sont connectées au moyen de séparateur 90 à deux entrées et deux sorties, permettant d'assurer une déperdition minimale, et donc un bilan énergétique optimal en la branche à retard 32.

Dans une variante du mode de réalisation de la fig. 3, il peut être intéressant de remplacer toute ou partie des commutateurs 38 par des coupleurs passifs, par exemple des séparateurs 50/50, assurant une division du signal entre la branche à retard 32 et les lignes élémentaires à retard 37. L'utilisation de plusieurs coupleurs passifs permet de multiplier le nombre de trains d'ondes fondamentaux, puisque plusieurs lignes élémentaires à retard 37 fonctionnent simultanément. Si le retard entre ces trains d'ondes est différent des retards qui séparent les trains d'ondes dus aux couplages $(TO_i)$, la mesure reste possible.

Cette option peut être adaptée pour deux buts différents :

- limiter le nombre d'éléments actifs. Dans ce cas le principe de fonctionnement est illustré en Fig. 4, pour quatre trains d'ondes fondamentaux. La lecture s'effectue alors à la manière d'un vernier, en amenant chacun des trains d'ondes secondaires $TO_i$ en interférence avec le train d'ondes fondamental le plus proche. Ainsi, la lecture de $TO_{i-1}$ se fait en faisant interférer ce train d'ondes avec $TO_{f1}$, les autres trains d'ondes $(TO_{f2}, TO_{f3}, TO_{f4})$ n'étant pas en coïncidence avec les trains d'onde $TO_i$ et ainsi de suite.

- limiter la plage d'exploration, comme illustré en fig.5. Ce mode de réalisation suppose que la branche à retard 32 de l'interféromètre de la fig. 3 soit munie d'une part de lignes élémentaires à retard à coupleurs passifs (pour la génération de plusieurs trains d'ondes fondamentaux), et d'autre part de lignes élémentaires à retard à commutateurs (pour le balayage rapide, par retards discrets, de l'ensemble du domaine de lecture). Ainsi, les $TO_{fi}$ peuvent être d'amplitude différente afin de discerner avec quel train d'onde $TO_i$ interfère.

Le dispositif de lecture suivant l'invention est particulièrement attrayant pour les capteurs à fibre, du fait de la possibilité de le réaliser en "tout fibre" :

- les commutateurs peuvent être du type "optique intégrée" et/ou des commutateurs diélectriques liquides comme décrit dans la demande de brevets français 8310914 ("dispositif à commande électrique de déplacement de fluide") ;

- les systèmes de décalage en fréquence du second mode de réalisation de la figure 6 peuvent être constitués par des modulateurs de phase, de type piézo-optique, acousto-optique ou optique intégrée ;

- les moyens de génération d'un retard variable 39 peuvent être réalisés par exemple sous forme d'une fibre entourée d'une gaine conductrice. En faisant circuler un courant dans la gaine, on peut ainsi chauffer la fibre et en faire varier le chemin optique (voir "Optical Fiber Thermal Modulator", Lightwave Technology ; Vol. LT-5 n° 9, septembre 1987). Une autre possibilité consiste à utiliser une fibre optique enroulée sur une céramique piézoélectrique, de façon qu'à l'application d'une tension à la céramique, son diamètre varie et entraîne une variation de la longueur de la fibre et donc du chemin optique.

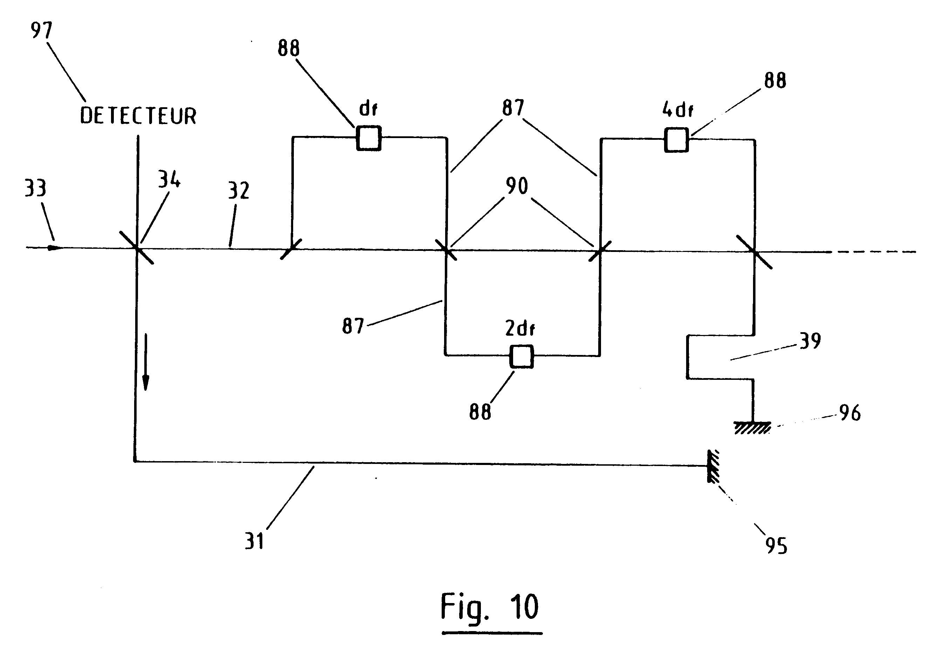

La figure 10 illustre un mode de réalisation du dispositif de l'invention en utilisant un interféromètre fonctionnant selon le principe de Michelson. Dans ce mode de réalisation, le signal optique est renvoyé, au bout de chacune des deux branches 31, 32, par deux miroirs 95 et 96. Les signaux réfléchis sont ensuite mis en coïncidence en sortie sur la lame séparatrice 34, et envoyés vers un détecteur 97.

On notera que l'invention ne se limite pas à l'utilisation d'un interféromètre de Mach Zehnder ou de Michelson, mais s'étend à tout autre type d'interféromètre compatible.

## Revendications

1. Dispositif d'analyse d'un signal optique comprenant un signal à traiter analysable comme au moins un train d'ondes fondamental (14) et un jeu de trains d'ondes secondaires (15) issus dudit train d'ondes fondamental (14) et accusant un jeu de retards $(t_1, t_2, ... tn)$ par rapport audit train d'onde fondamental (14), ledit dispositif étant destiné à amener ledit train d'ondes fondamental (14) en interférence avec chacun desdits trains d'ondes secondaires (15),

ledit dispositif comportant un interféromètre, dont une première branche (31) est parcourue par au moins lesdits trains d'ondes secondaires (15), et une seconde branche (32) est parcourue par au moins ledit train d'ondes fondamental (14), caractérisé

en ce que ladite deuxième branche (32) est munie d'un jeu de moyens (37, 39, 67, 87)) de génération de retards dudit train d'ondes fondamental (14), placés en série sur ladite deuxième branche (32) et sélectivement commutables dans cette deuxième branche par des moyens de commutation (38) et d'autre part de moyens (39) de génération d'un retard continuement variable dudit train d'ondes fondamental (14) sur une plage autour de chaque valeur quantifiée de retard.

2. Dispositif selon la revendication 1, caractérisé en ce que lesdits moyens de génération de retards comportent des lignes élémentaires à retard (37) qui sont sélectivement commutable dans ladite deuxième branche (32) de façon à fournir une combinaison de valeurs quantifiées de retards (t, 2t, 3t, ...) par combinaison (t1, t2, t1 + t2...) des lignes élémentaires (37) simultanément et sélectivement commutées.

3. Dispositif suivant la revendication 2, caractérisé en ce que lesdites lignes élémentaires à retard (37) ont des valeurs de retard distribuées selon une progression géométrique (t, 2t, 4t, .... , $2^{n}t$).

4. Dispositif suivant la revendication 2, caractérisé en ce que lesdits moyens de commutation (38) desdites lignes élémentaires à retard sont des commutateurs à diélectrique liquide.

5. Dispositif suivant la revendication 1, caractérisé en ce que lesdits moyens de génération de retards (67, 87) sont associés à des moyens (68) de décalage en fréquence du signal retardé, de façon que chaque valeur de retard ($t_i$) corresponde à un décalage en fréquence spécifique.

6. Dispositif suivant la revendication 5, caractérisé en ce que lesdits moyens de génération de retards (67) sont constitués par un jeu de lignes élémentaires à retard (67), consécutives et couplées chacune en parallèle sur ladite deuxième branche (32), de façon à fournir simultanément une combinaison de valeurs quantifiées de retards (t, 2t, 3t,...) associées chacune à un décalage en fréquence (df, 2df, 3df...) spécifique par combinaison des trajets optiques suivis par le signal retardé.

7. Dispositif suivant la revendication 5, caractérisé en ce que lesdits moyens de génération de retards (67), ainsi que les valeurs de décalage en fréquences (df) correspondantes, ont des valeurs de retard, de décalage en fréquence respectivement, distribuées selon une progression géométrique.

8. Dispositif suivant la revendication 5, caractérisé en ce que lesdits moyens de génération de retards (87) sont constituées par une ligne unique (87, 88) à retard et à décalage en fréquence, couplée en parallèle et en bouclage arrière sur ladite deuxième branche (32).

9. Dispositif suivant l'une quelconque des revendications 5 et 8, caractérisé en ce que les moyens de couplage desdits moyens de génération de retards (67, 87) sont constituées par des séparateurs optiques (69, 90) destinés à diviser le signal à chaque point de couplage.

10. Dispositif suivant les revendications 6 et 9, caractérisé en ce qu'il comporte des séparateurs (90) à deux entrées et deux sorties à déperdition minimale, insérés chacun dans la deuxième branche (32) entre deux lignes élémentaires à retard consécutives (67).

11. Dispositif suivant la revendication 5, caractérisé en ce que lesdits moyens (68) de décalage en fréquence appartiennent au groupe comprenant les retardateurs à effet Doppler, ou à cristal acousto optique, les modulateurs de phase, thermooptique et/ou électrooptique.

12. Dispositif selon l'une quelconque des revendications 1 à 11, caractérisé en ce qu'il est associé à un capteur à multiplexage par cohérence, du type constitué par une fibre monomode (10) à maintien de polarisation comportant des points de couplage (12) entre les deux axes de biréfringence.

13. Dispositif suivant la revendication 1, caractérisé en ce que ledit interféromètre est muni de moyens de lecture de la distance entre les trains d'onde et/ou de l'amplitude des trains d'onde couplés.

14. Dispositif suivant la revendication 1, caractérisé en ce que lesdits moyens (39) de génération d'un retard variable sont constitués par un système à fibre optique thermorégulée.

15. Dispositif suivant la revendication 1, caractérisé en ce que ladite branche à retard (32) comprend un jeu de lignes élémentaires à retard connectées en série par coupleurs passifs sur ladite deuxième branche (32), de façon à fournir simultanément plusieurs trains d'ondes fondamentaux à retards distincts.

16. Dispositif selon la revendication 1, caractérisé en ce que ledit interféromètre est compatible aux interféromètres de Mach Zehnder ou de Michelson.

17. Dispositif selon la revendication 1, caractérisé en ce que lesdits moyens de génération de retards dudit train d'ondes fondamental (14) comportent des moyens de génération de retards quantifiés (37, 67, 87) du train d'ondes fondamental et des moyens de génération d'un retard continuement variable dudit train

**EP 0 404 859 B1**

d'ondes fondamental autour de chaque valeur quantifiée de retard.

18. Dispositif suivant la revendication 1, caractérisé en ce que lesdits moyens de commutation (38) desdites lignes élémentaires à retard sont des commutateurs réalisés en optique intégrée.

## Patentansprüche

1. Vorrichtung zur Analyse eines optischen Signals mit einem analysierbaren, zu behandelnden Signal wie mindestens einem Grundwellenzug (14) und einem Satz von Sekundärwellenzügen (15), die aus dem Grundwellenzug (14) hervorgehen und bezüglich des Grundwellenzugs (14) einen Satz von Verzögerungen ($t_1$, $t_2$, ...tn) aufweisen, wobei die Vorrichtung dazu bestimmt ist, den Grundwellenzug (14) mit jedem der Sekundärwellenzüge (15) zur Interferenz zu bringen und wobei die Vorrichtung ein Interferometer enthält, dessen erster Zweig (31) von mindestens den Sekundärwellenzügen (15) durchlaufen wird, während ein zweiter Zweig (32) mindestens von dem Grundwellenzug (14) durchlaufen wird, dadurch gekennzeichnet, daß der zweite Zweig (32) einerseits mit einem Satz von Mitteln (37, 39, 67, 87) zur Erzeugung von Verzögerungen des Grundwellenzugs (14), die in Reihe in dem zweiten Zweig (32) angeordnet sind und selektiv in diesen zweiten Zweig durch Schaltmittel (38) einschaltbar sind, und andererseits mit Mitteln (39) zur Erzeugung einer kontinuierlich variablen Verzögerung des Grundwellenzugs (14) in einem Bereich um jeden quantifizierten Verzögerungswert versehen ist.

2. Vorrichtung nach Anspruch 1, dadurch gekennzeichnet, daß die Mittel zur Erzeugung von Verzögerungen Elementarverzögerungsleitungen (37) aufweisen, die selektiv in den zweiten Zweig (32) einschaltbar sind, derart, daß sie eine Kombination diskreter Verzögerungswerte (t, 2t, 3t, ...) durch Kombination (t1, t2, t1+t2, ...) der gleichzeitig und selektiv eingeschalteten Elementarleitungen (37) bilden.

3. Vorrichtung nach Anspruch 2, dadurch gekennzeichnet, daß die Elementarverzögerungsleitungen (37) Verzögerungswerte besitzen, die gemäß einer geometrischen Reihe (t, 2t, 4t, ...$2^n t$) verteilt sind.

4. Vorrichtung nach Anspruch 2, dadurch gekennzeichnet, daß die Schaltmittel (38) für die Elementarverzögerungsleitungen Schalter mit flüssigem Dielektrikum sind.

5. Vorrichtung nach Anspruch 1, dadurch gekennzeichnet, daß die Mittel zur Erzeugung von Verzögerungen (67, 87) Mitteln (68) zur Frequenzverschiebung des verzögerten Signals zugeordnet sind, derart, daß jeder Verzögerungswert ($t_1$) einer bestimmten Frequenzverschiebung entspricht.

6. Vorrichtung nach Anspruch 5, dadurch gekennzeichnet, daß die Mittel zur Erzeugung von Verzögerungen (67) von einem Satz von aufeinanderfolgenden Elementarverzögerungsleitungen (67) gebildet werden, die je parallel an den zweiten Zweig (32) gekoppelt sind und zugleich eine Kombination von diskreten Verzögerungswerten (t, 2t, 3t, ...) in Verbindung mit je einer spezifischen Frequenzverschiebung (df, 2df, 3df, ...) durch Kombination der vom verzögerten Signal durchlaufenen optischen Wege bilden.

7. Vorrichtung nach Anspruch 5, dadurch gekennzeichnet, daß die Mittel zur Erzeugung von Verzögerungen (67) sowie die entsprechenden Frequenzverschiebungswerte (df) Verzögerungswerte bzw. Frequenzverschiebungswerte aufweisen, die gemäß einer geometrischen Reihe verteilt sind.

8. Vorrichtung nach Anspruch 5, dadurch gekennzeichnet, daß die Mittel zur Erzeugung von Verzögerungen (87) von einer einzigen Verzögerungs- und Frequenzverschiebungsleitung (87, 88) gebildet wird, die parallel und in Rückwärtschleife mit dem zweiten Zweig (32) gekoppelt ist.

9. Vorrichtung nach einem beliebigen der Ansprüche 5 und 8, dadurch gekennzeichnet, daß die Mittel zum Koppeln der Mittel zur Erzeugung von Verzögerungen (67, 87) von optischen Separatoren (69, 90) gebildet werden, die dazu bestimmt sind, das Signal in jedem Koppelpunkt aufzuteilen.

10. Vorrichtung nach den Ansprüchen 6 und 9, dadurch gekennzeichnet, daß sie Separatoren (90) mit zwei Eingängen und zwei Ausgängen und sehr geringen Verlusten aufweist, die je zwischen zwei aufeinanderfolgenden Elementarverzögerugsleitungen (37) in den zweiten Zweig (32) eingefügt sind.

11. Vorrichtung nach Anspruch 5, dadurch gekennzeichnet, daß die Frequenzverschiebungsmittel (68) zu der

7

Gruppe gehören, die Dopplereffekt-Verzögerungsglieder oder Verzögerungsglieder mit akusto-optischem Kristall, thermo-optischen und/oder elektro-optischen Phasenmodulatoren enthalten.

**12.** Vorrichtung nach einem beliebigen der Ansprüche 1 bis 11, dadurch gekennzeichnet, daß sie einer Kohärenzmultiplexiersonde zugeordnet ist, von der Art, die aus einer Monomodefaser (10) mit Polarisationskonstanz und mit Koppelpunkten (12) zwischen den beiden Doppelbrechungsachsen besteht.

**13.** Vorrichtung nach Anspruch 1, dadurch gekennzeichnet, daß das Interferometer Mittel zum Ablesen des Abstands zwischen den Wellenzügen und/oder der Amplitude der gekoppelten Wellenzüge besitzt.

**14.** Vorrichtung nach Anspruch 1, dadurch gekennzeichnet, daß die Mittel (39) zur Erzeugung einer variablen Verzögerung von einem optischen Fasersystem mit Thermoregelung gebildet werden.

**15.** Vorrichtung nach Anspruch 1, dadurch gekennzeichnet, daß der Verzögerungszweig (32) einen Satz von elementaren Verzögerungsleitungen besitzt, die über passive Koppler in Reihe an den zweiten Zweig (32) angeschlossen sind, so daß sie gleichzeitig mehrere Grundwellenzüge mit unterschiedlichen Verzögerungen liefern.

**16.** Vorrichtung nach Anspruch 1, dadurch gekennzeichnet, daß das Interferometer mit den Mach-Zehnder-Interferometern oder den Michelson-Interferometern kompatibel ist.

**17.** Vorrichtung nach Anspruch 1, dadurch gekennzeichnet, daß die Mittel zur Erzeugung von Verzögerungen des Grundwellenzugs (14) Mittel zur Erzeugung quantifizierter Verzögerungen (37, 67, 87) des Grundwellenzugs und Mittel zur Erzeugung einer kontinuierlich variablen Verzögerung des Grundwellenzugs um jeden diskreten Verzögerungswert herum besitzt.

**18.** Vorrichtung nach Anspruch 1, dadurch gekennzeichnet, daß die Schaltmittel (38) für die Elementarverzögerungsleitungen Schalter sind, die in integrierter Optik-Technologie ausgeführt sind.

## Claims

**1.** Device for analysing an optical signal comprising a signal to be processed analysable as at least one fundamental wave train (14) and a set of secondary wave trains (15) emanating from the said fundamental wave train (14) and marking out a set of delays ($t_1$, $t_2$, ... tn) with respect to the said fundamental wave train (14), the said device being intended to bring the said fundamental wave train (14) into interference with each of the said secondary wave trains (15),
the said device including an interferometer, of which a first branch (31) is traversed by at least the said secondary wave trains (15), and a second branch (32) is traversed by at least the said fundamental wave train (14), characterised
in that the said second branch (32) is equipped with a set of means (37, 39, 67, 87) for generating delays of the said fundamental wave train (14), and which are placed in series with the said second branch (32) and can be switched selectively into this second branch by switching means (38) and furthermore with means (39) of generating a continuously variable delay of the said fundamental wave train (14) over a range about each quantised delay value.

**2.** Device according to Claim 1, characterised in that the said means of generating delays include elementary delay lines (37) which can be selectively switched into the said second branch (32) so as to supply a combination of quantised delay values (t, 2t, 3t, ...) by combining (t1, t2, t1 + t2...) elementary lines (37) switched simultaneously and selectively.

**3.** Device in accordance with Claim 2, characterised in that the said elementary delay lines (37) have delay values distributed in a geometric progression (t, 2t, 4t, ..., $2^n$ t).

**4.** Device in accordance with Claim 2, characterised in that the said switching means (38) of the said elementary delay lines are liquid dielectric switches.

**5.** Device in accordance with Claim 1, characterised in that the said means (67, 87) of generating delays are associated with means (68) of frequency-shifting of the delayed signal, so that each delay value ($t_i$) cor-

responds to a specific frequency shift.

6. Device in accordance with Claim 5, characterised in that the said means (67) of generating delays consist of a set of elementary delay lines (67) which are consecutive and are each coupled in parallel with the said second branch (32), so as to supply simultaneously a combination of quantised delay values (t, 2t, 3t,...) each associated with a specific frequency shift (df, 2df, 3df...) by combining the optical paths followed by the delayed signal.

7. Device in accordance with Claim 5, characterised in that the said means (67) of generating delays, as well as the corresponding frequency shift values (df) have delay and frequency-shift values respectively which are distributed in a geometric progression.

8. Device in accordance with Claim 5, characterised in that the said means (87) of generating delays consist of a single, delay and frequency-shift line (87, 88) coupled in parallel and as a rear looping to the said second branch (32).

9. Device in accordance with either one of Claims 5 and 8, characterised in that the means of coupling the said means of generating delays (67, 87) consist of optical splitters (69, 90) intended for dividing the signal at each coupling point.

10. Device in accordance with Claims 6 and 9, characterised in that it includes splitters (90) with two inputs and two outputs with minimum leakage, each inserted into the second branch (32) between two consecutive elementary delay lines (67).

11. Device in accordance with Claim 5, characterised in that the said frequency-shifting means (68) belong to the group comprising Doppler effect or acousto-optical crystal-based retarders, phase modulators, thermooptics and/or electrooptics.

12. Device according to any one of Claims 1 to 11, characterised in that it is associated with a coherence multiplexing sensor, of the type consisting of a polarisation-retaining monomode fibre (10) including coupling points (12) between the two birefringence axes.

13. Device in accordance with Claim 1, characterised in that the said interferometer is equipped with means of reading the distance between the wave trains and/or the amplitude of the coupled wave trains.

14. Device in accordance with Claim 1, characterised in that the said means (39) of generating a variable delay consist of a thermoregulated optical fibre system.

15. Device in accordance with Claim 1, characterised in that the said delay branch (32) comprises a set of elementary delay lines connected in series by passive couplers to the said second branch (32), so as to supply simultaneously several fundamental wave trains with distinct delays.

16. Device according to Claim 1, characterised in that the said interferometer is compatible with Mach Zehnder or Michelson interferometers.

17. Device according to Claim 1, characterised in that the said means of generating delays of the said fundamental wave train (14) include means (37, 67, 87) of generating quantised delays of the fundamental wave train and means of generating a continuously variable delay of the said fundamental wave train about each quantised delay value.

18. Device in accordance with Claim 1, characterised in that the said switching means (38) of the said elementary delay lines are switches produced with integrated optics.

FIG.1

FIG.2a

FIG.2b

FIG.3

FIG.6

FIG.4

FIG.5

Décalage en fréquence

FIG.7

FIG.8

FIG.9

Fig. 10

EP 0 404 859 B1